# DEMANDE DE BREVET EUROPEEN

(11) **EP 1 788 507 A2**
(43) Date de publication de la demande: **23.05.2007**
(21) Numéro de dépôt: 06124219.4
(22) Date de dépôt: 16.11.2006
(51) Int. Cl.: G06F 21/00, G06F 21/02, G06F 21/04, G06F 21/24, G07F 7/08

(54) **Terminal de transaction électronique pouvant fonctionner en mode sécurisé et en mode non sécurisé, ainsi que méthode adaptée au dispositif**

(30) Priorité: 16.11.2005 CH 18352005
(71) Demandeur: Ingenico SA, 92200 Neuilly sur Seine (FR)
(72) Inventeur: Bays, Pierre, 1723, Marly (CH); Bays, Jean-Nicolas, 1744, Chénens (CH); Niclass, Cristiano, 1815, Clarens (CH); Petraglio, Enrico, 1066, Epalinges (CH); Straumann, Reto, 1763, Granges-Paccots (CH)
(74) Mandataire: P&TS Patents & Technology Surveys SA

(57) **Abrégé**

Une méthode pour protéger les données d'un terminal de traitement électronique (1) contre les attaques malveillantes, comportant les étapes suivantes :
Exécution d'une application sécurisée par un premier processeur (7) sécurisé,
Exécution d'une application non sécurisée par un deuxième processeur (9) non sécurisé partageant l'affichage avec le premier processeur,
Indication sur ledit affichage du terminal de traitement électronique du mode de fonctionnement sélectionné.

La première application peut par exemple être une application de paiement et la deuxième application un programme de gestion de programme de fidélisation.

## Description

### Domaine technique

La présente invention concerne le domaine des terminaux de transaction électronique, notamment les dispositifs comprenant un afficheur, un clavier et un lecteur de cartes à puce et/ou à piste magnétiques, pouvant fonctionner en mode sécurisé et en mode non sécurisé. La présente invention concerne aussi une méthode d'affichage pour un tel terminal.

### Etat de la technique

On connaît dans l'art antérieur des terminaux de transaction électronique, notamment des terminaux de paiement électronique permettant à l'utilisateur d'effectuer un paiement au moyen d'une carte de débit, d'une carte de crédit et/ou d'une carte à prépaiement. Les terminaux existants sont souvent munis d'un lecteur de carte, par exemple un lecteur de carte à puce et/ou de carte à piste magnétique, d'un clavier avec lequel l'utilisateur peut notamment introduire son mot de passe et différentes commandes, ainsi que d'un afficheur, par exemple un afficheur à cristaux liquides, à matrice ou parfois à segments, permettant d'afficher des instructions, des menus, des confirmations, etc. Les terminaux usuels sont en outre souvent munis d'une interface de communication permettant d'établir une communication à distance avec un ordinateur ou un central de paiement, au travers d'une liaison filaire ou sans fils. On connaît à la fois des terminaux portables autonomes électriquement ainsi que des terminaux de table ou muraux, souvent alimentés en électricité par le réseau, et connectés à un réseau téléphonique ou Ethernet par exemple.

On connaît également d'autres types de terminaux de transaction électroniques permettant par exemple de lire des cartes à puce contenant des codes d'accès à un système sécurisé, des données confidentielles, y compris des données médicales, des données biométriques, etc.

A l'heure actuelle, dans le marché des terminaux de transaction électroniques, une demande toujours plus forte existe pour des dispositifs capables de gérer à la fois des applications sécurisées, par exemple des applications liées au paiement électronique ou à la lecture de données confidentielles, et des applications non sécurisées. Les applications sécurisées permettent par exemple d'effectuer des transactions monétaires avec la carte insérée dans le terminal, par exemple pour effectuer un paiement ou pour recharger un compte prépayé.

Les applications non sécurisées peuvent utiliser différents logiciels utilisés au point de vente mais non liés au paiement ou à l'application sécurisée. Des applications non sécurisées peuvent par exemple être exécutées pour gérer des programmes de fidélité, par exemple pour offrir des primes aux utilisateurs en fonction du montant de leurs dépenses. D'autres applications non sécurisées peuvent être liées par exemple à l'exploitation, à la configuration et au test de certaines fonctions du terminal de transaction, ou à la configuration des préférences de l'exploitant du terminal. Les applications non sécurisées se distinguent notamment des applications sécurisées par le fait qu'elles n'ont pas fait l'objet d'une homologation. Un fanion ou un champ dans le code de l'application ou dans un fichier de configuration permet d'indiquer si l'application est sécurisée ou non. Généralement, les applications sécurisées emploient des méthodes cryptographiques pour vérifier l'intégrité du code exécuté, l'identité et l'authenticité de l'utilisateur, etc.

La plateforme matérielle du terminal de transaction doit assurer une étanchéité parfaite entre les différentes applications afin que les applications non sécurisées n'accèdent pas à des données sensibles appartenant à une ou plusieurs applications sécurisées.

Certains terminaux de transaction, notamment les terminaux de paiement, sont soumis à des procédures de certification par rapport à des standards nationaux et internationaux. Particulièrement, un des aspects les plus importants qui est vérifié durant ces procédures de certification concerne la protection des données sensibles et personnelles du porteur d'une carte à paiement électronique, notamment les données d'identification telles que mots de passe, code PIN (personal identification number) ou données biométriques. Ces données sont utilisées durant une transaction de paiement électronique pour identifier ou authentifier le porteur de la carte et ne doivent en aucun cas être stockées ou transmises dans un environnement non sécurisé. Les méthodes de protection du code PIN, par exemple, emploient différents mécanismes matériels et logiciels pour les protéger notamment contre des attaques de tiers. Toute modification matérielle ou logicielle qui a un rapport direct ou indirect avec l'environnement sécurisé du terminal implique une nouvelle procédure de certification.

Des procédures de certification existent aussi avec des terminaux non liés au paiement.

Ces procédures de certification sont coûteuses et lentes. II est par conséquent difficile de développer différentes versions du logiciel d'un terminal, et de mettre à jour ce logiciel par exemple en fonction de besoins marketing ou pour adapter un programme de fidélisation, parce que chaque nouvelle version et chaque mise à jour nécessite une nouvelle certification.

Même si aucune certification n'est nécessaire, le concepteur d'une application sécurisée pour un terminal de transaction électronique souhaite généralement éviter les risques de manipulation par d'autres applications installées sur le même terminal.

Un but de la présente invention est de proposer un terminal de transaction ouvert de telle façon que de nouvelles certifications ne soient pas nécessaires lorsqu'une application non sécurisée est modifiée. En particulier, un but est aussi de proposer un terminal de transaction électronique comportant à la fois un environnement sécurisé certifié, et un environnement non sécurisé, qui puisse être modifié sans nécessiter de nouvelle certification. Un but est aussi que l'environnement sécurisé du terminal de transaction électronique, ainsi que les données et programmes sensibles de la portion sécurisée du terminal, soient protégés à tout moment et cela indépendamment des applications non sécurisées installées sur le même terminal.

Ainsi, un fabriquant de terminaux pourrait commercialiser des terminaux de transaction sécurisés mais permettant à des tiers, par exemple ses clients tels que les responsables de magasins ou restaurants, de développer ou d'installer des applications non sécurisées selon leurs besoins sans devoir se soucier des standards liés au paiement électronique, sans certification et sans compromettre la sécurité d'applications sécurisées. De même, le fabriquant pourrait aussi plus aisément personnaliser certains aspects des terminaux de transaction, ou varier les fonctionnalités non sécurisées offertes, sans nécessiter une certification ou un test de sécurité pour chaque nouvelle variante.

De plus, les applications non sécurisées pourraient être maintenues et mises à jour par leurs concepteurs à tout moment sans impliquer de nouvelles procédures de certification du terminal de transaction électronique. Un tel dispositif offre donc une plus grande souplesse dans le processus de développement et de distribution de nouvelles applications liées à la monétique par exemple.

Différentes solutions ont été apportées dans l'art antérieur afin d'assurer une séparation effective entre différentes applications d'un terminal de transaction électronique. Les méthodes les plus courantes mettent en oeuvre un processeur conçu de telle façon que le contexte d'exécution et l'espace mémoire de chaque application soient séparés de ceux des autres. La technique la plus courante consiste en la création d'un niveau d'abstraction supplémentaire dans l'accès à la mémoire par une application. De cette façon, l'espace mémoire vu par une application, généralement appelé espace virtuel, se trouve physiquement dans la mémoire du terminal de transaction à un endroit inconnu par l'application et bien entendu différent de celui des toutes les autres applications. De plus, ce type de processeur ou de système d'exploitation n'accepte pas qu'une application accède à un emplacement de mémoire au-delà de l'espace qui lui appartient. Ces solutions nécessitent cependant un processeur ou un système d'exploitation particulier, ce qui limite les choix disponibles pour le fabricant. La sécurité repose sur la conception du système d'exploitation, qui est un logiciel complexe dont il est difficile de garantir la fiabilité totale; il est en particulier difficile d'exclure absolument qu'une application tournant dans un espace réservé de la mémoire ne parvienne à exploiter une faille pour accéder à des données d'un autre espace mémoire.

Afin d'augmenter davantage le niveau de sécurité dans la séparation entre les applications sécurisées et celles non sécurisées, on pourrait imaginer d'intégrer deux ou plusieurs processeurs dans un seul terminal. Un des processeurs, par exemple le maître, se charge des applications sécurisées, tandis que les ou les autres processeurs se chargent des autres applications. Cette configuration assure une séparation matérielle entre les deux environnements dans lesquels les différentes applications sont exécutées, et permet en outre une amélioration des performances de calcul, notamment en ce qui concerne la faculté de traiter des tâches en parallèle.

Les terminaux de traitement multiprocesseurs sont cependant vulnérables à des attaques connues sous le nom d'usurpation d'identité, ou phishing. Dans ce type d'attaque, une application non sécurisée pourrait se faire passer pour une application sécurisée et par exemple inviter un utilisateur à introduire son mot de passe. Comme les applications sécurisées et non sécurisées partagent les mêmes interfaces utilisateurs, et notamment le même affichage, la même imprimante, le même clavier, etc., il est pratiquement impossible pour l'utilisateur de découvrir la substitution.

Un autre but de la présente invention est donc de proposer un terminal de traitement électronique moins vulnérable aux attaques de type phishing. Un autre but est de proposer une méthode pour protéger les données d'un terminal de traitement électronique contre les attaques malveillantes.

### Bref résumé de l'invention

Afin de résoudre les problèmes susmentionnés, le terminal de traitement électronique de l'invention emploie deux modes de fonctionnement : un mode sécurisé et un mode non sécurisé. Le mode sécurisé est utilisé pour toutes les transactions sécurisées, par exemple les transactions liées au paiement électronique. Dans ce mode, la totalité des interfaces utilisateurs peut être utilisée par le porteur de carte en toute sécurité. Le mode non sécurisé est utilisé pour d'autres transactions, qui ne nécessitent pas de certification ou qui peuvent être installées par l'opérateur du terminal sans contrôle du fabricant. Une indication est apportée à l'utilisateur afin de lui indiquer lorsqu'il se trouve dans un mode non sécurisé.

### Brève description des dessins

Des exemples de mise en oeuvre de l'invention sont indiqués dans la description illustrée par les figures annexées dans lesquelles :
La figure 1 illustre de manière schématique un terminal de traitement électronique dans un mode de fonctionnement sécurisé, respectivement dans un mode de fonctionnement non sécurisé.
La figure 2 illustre sous forme de schéma-bloc un terminal de traitement électronique selon l'invention.

### Exemple(s) de mode de réalisation de l'invention

Le terminal de traitement électronique 1 illustré sur les figures comporte de préférence un clavier 2, par exemple un clavier numérique ou alphanumérique, et un affichage 3, par exemple un affichage à segment ou de préférence un affichage matriciel, par exemple de type LCD ou plasma. D'autres périphériques 8 peuvent être employés, par exemple un lecteur de carte à puce et/ou de cartes à piste magnétiques, un lecteur de cartes Flash, de disquettes, de disques optiques, des capteurs biométriques, un microphone, un haut-parleur, une souris, un touchpad, etc. Le terminal de traitement électronique comporte en outre de préférence au moins une interface (ou module) de communication 10, par exemple une interface filaire de type RS232, USB, Firewire, Ethernet, etc, ou une interface sans fil, par exemple de type Bluetooth, WLAN, IRDA, etc. afin de connecter le terminal à des dispositifs externes, par exemple des ordinateurs. Le terminal est de préférence portable et autonome électriquement, alimenté par des piles ou des accumulateurs rechargeables; l'invention s'applique cependant également à des terminaux de traitement électronique connectés au réseau, par exemple des terminaux de table ou liés ou intégrés à une caisse-enregistreuse. Le terminal est de préférence conçu et destiné à être employé par une pluralité d'utilisateurs non formés, par exemple par les clients d'un magasin, d'un restaurant, etc souhaitant régler une prestation ou un achat.

Le terminal comporte de préférence deux contrôleurs, par exemple deux processeurs, distincts 7 et 9. Le premier processeur 7 est responsable de l'exécution d'applications fonctionnant en mode sécurisé, notamment d'applications liées au paiement, au contrôle d'accès, au stockage de données confidentielles, etc. Les composants matériels et logiciels employés par ce mode de fonctionnement sécurisé sont de préférence certifié, cette portion du dispositif étant réglementée par exemple par les standards EMV niveau 1 et/ou niveau 2. Les logiciels exécutés par le premier processeur sont de préférence installés par le fabricant du terminal, avant certification. Le premier processeur opère de préférence sous le contrôle d'un système d'exploitation sécurisé, de préférence un système propriétaire au fabricant de terminaux. Le premier contrôleur 7 contrôle en outre directement les interfaces d'entrées et de sorties vers l'utilisateur, notamment l'affichage 3, le clavier 2, et toute autre interface à sécuriser ou nécessitant une certification. Les contrôleurs de ces interfaces sont ainsi de préférence directement contrôlés, et reliés physiquement, au processeur 7 qui exécute aussi les éventuels gestionnaires (drivers) nécessaires. Le premier processeur 7 peut aussi de préférence accéder directement à un module de communication non représenté, par exemple une interface Bluetooth, une carte réseau Ethernet, un module GSM, etc, permettant ainsi par exemple à des applications dans l'environnement sécurisé d'échanger de manière sécurisée des données ou des programmes avec des dispositifs externes ou d'accéder à Internet ou à un réseau local ou privé, par exemple. Un module cryptographique peut être employé pour crypter, décrypter ou signer des données transmises au travers de cette interface.

Le deuxième processeur 9 est responsable de l'exécution d'applications non sécurisées, qui peuvent être installés à n'importe quel moment par le fabricant du terminal 1 ou par un tiers, par exemple le responsable du magasin ou du restaurant exploitant le terminal. Ces applications sont non soumises à certification et accèdent uniquement aux données non sensibles. Le deuxième processeur est de préférence exploité par un système d'exploitation courant, par exemple Linux, un des systèmes d'exploitation de Windows apte à fonctionner avec des terminaux de transaction électroniques,, Palm OS ou Symbian, permettant d'exécuter et de développer sans difficultés un nombre important d'applications variées. Le deuxième processeur peut accéder directement à son propre module de communication 10, par exemple une interface Bluetooth, une carte réseau Ethernet, un module GSM, etc, permettant ainsi par exemple à des applications dans l'environnement non sécurisé d'échanger des données ou des programmes avec des dispositifs externes ou d'accéder à Internet ou à un réseau local ou privé, par exemple. Dans une variante non illustrée, le deuxième processeur accède à un module de communication uniquement au travers du premier processeur 7 ; cette variante nécessite cependant des adaptations éventuelles au code des programmes non sécurisés. Dans une variante, le processeur sécurisé emploie le module de communication 10 de l'environnement non sécurisé 6, en protégeant cependant les données échangées par cet environnement au moyen de solutions cryptographiques permettant d'assurer leur confidentialité, leur intégrité et leur provenance.

En lieu et place du premier et/ou du deuxième processeur 9, il est aussi possible d'employer d'autres composants électroniques logiques, par exemple un ASIC, un circuit FPGA, etc

Les applications sécurisées exécutées par le processeur 7 partagent donc les interfaces utilisateur 2, 3, 8 avec les applications non sécurisées exécutées par le deuxième processeur 9. Selon l'invention, l'utilisateur du terminal est maintenu informé à tout moment du mode de fonctionnement dans lequel le terminal se trouve. Pour ce faire, dans une variante préférentielle, une indication appropriée est apportée sur une partie de l'affichage 3.

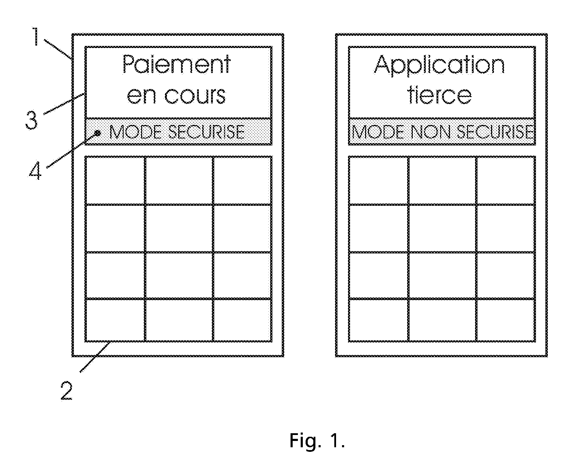

La Figure 1 présente un exemple d'implémentation. A gauche, le terminal de traitement électronique 1 se trouve dans le mode sécurisé. Dans ce mode, l'application de traitement électronique a la maîtrise de toutes les interfaces utilisateurs, notamment sur le clavier 2 et l'afficheur 3. Une partie 4 de ce dernier est utilisée pour maintenir l'utilisateur informé que le terminal se trouve actuellement dans un mode sécurisé. L'utilisateur peut donc faire confiance aux requêtes de l'application, par exemple si cette dernière sollicite son code PIN. A droite de la Figure 1, le terminal se trouve dans le mode non sécurisé et le porteur est maintenu clairement informé de ce mode par un message sur la portion 4 de l'affichage.

L'indication apportée sur l'affichage peut l'être en plusieurs langues, affichées simultanément ou à tour de rôle. Le message peut aussi varier au cours du temps, par exemple en défilant horizontalement ou verticalement dans une fenêtre sur l'affichage. Dans une variante, la portion 4 réservée à l'affichage d'une indication de mode de fonctionnement se déplace sur la surface totale de l'affichage, de manière à éviter que cette portion du terminal puisse être recouverte par un adhésif par exemple. Il est aussi possible d'informer l'utilisateur du mode de fonctionnement du terminal au moyen d'autres indications, par exemple à l'aide de symboles graphiques, ou d'un choix de codes de couleur sur au moins une portion de l'affichage, ou par un signal sonore, par exemple un message vocal enregistré ou synthétisé, ou encore à l'aide de voyants lumineux, par exemple de diodes électroluminescentes distinctes de l'affichage 3. Il est également possible d'informer l'utilisateur du mode de fonctionnement uniquement lorsqu'il emploie une application non sécurisée, et de n'employer aucune indication lorsque l'environnement est sûr.

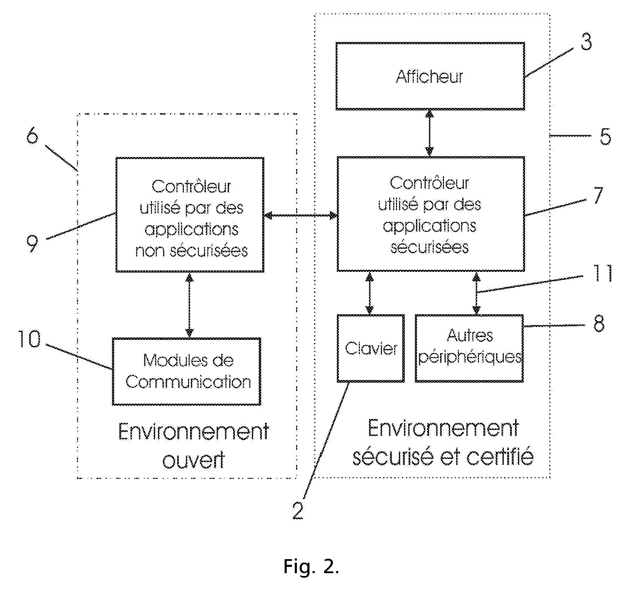

La Figure 2 montre un diagramme bloc d'un exemple de réalisation de terminal de traitement électronique selon la présente invention. On peut distinguer deux environnements : l'environnement sécurisé 5 qui est implémenté et maintenu par le fabricant de terminaux de traitement électronique et l'environnement ouvert 6 disponible à des tiers pour leurs besoins spécifiques en termes d'applications. Dans cet exemple-ci, chaque environnement possède son électronique de contrôle, c'est-à-dire un contrôleur pour gérer les périphériques sous l'environnement sécurisé 7 et un contrôleur (ou processeur) pour l'environnement ouvert 9. Chaque processeur peut être réalisé par un ou plusieurs composants, par exemple un microprocesseur, un microcontrôleur, un circuit FPGA, une mémoire, un ASIC, etc, ou des combinaisons de ces éléments. Dans l'environnement non sécurisé, on utilisera préférablement des contrôleurs programmables tels que les microprocesseurs, les microcontrôleurs et les FPGAs (field programmable gate arrays). La programmation de ces composants peut avantageusement être effectuée au moyen de programmes exécuté par le processeur 7 sécurisé. Les deux processeurs 7 et 9 communiquent entre eux par exemple au moyen d'un bus ou en partageant un espace de mémoire commun.

A travers une interface de communication 11, le processeur sécurisé 7 rend disponible et effaçable uniquement une partie de l'afficheur du terminal de traitement électronique. De cette façon, une application exécutée dans l'environnement ouvert ne pourrait ni changer le mode de fonctionnement actuel du terminal ni effacer le message qui rend l'utilisateur informé de ce mode. Outre le clavier 3 et l'afficheur 4, les autres périphériques d'interface utilisateur 8 tels que les témoins lumineux restent généralement sous le contrôle de l'environnement sécurisé.

Des informations non sensibles peuvent être échangées entre au moins une application fonctionnant dans le mode sécurisés et au moins une application fonctionnant dans le mode non sécurisé. Dans un exemple, le premier processeur 7 exécute une application de paiement sécurisée, nécessitant l'introduction d'un mot de passe. Suite au paiement, certaines informations non sensibles sont transmises au deuxième processeur 9 qui exécute une application de gestion de programme de fidélisation, par exemple.

Dans un autre exemple, le premier processeur exécute une application accédant à des données confidentielles, par exemple des données de type médical, biométriques, des certificats d'authentification, des mots de passe, des codes d'accès, etc, ou des programmes et des ressources permettant de mettre en oeuvre un protocole de cryptage ou d'authentification électronique. Le deuxième processeur exécute de son côté d'autres applications, par exemple des statistiques, etc, qui n'ont pas accès aux données, programmes et ressources confidentiels du premier processeur.

## Revendications

1. Une méthode pour protéger les données d'un terminal de traitement électronique (1) contre les attaques malveillantes, comportant les étapes suivantes :
sélection entre un mode de fonctionnement du terminal de traitement électronique sécurisé et un mode de fonctionnement non sécurisé,
indication à l'utilisateur du terminal de traitement électronique du mode de fonctionnement sélectionné.

2. La méthode de la revendication 1, dans laquelle une indication du mode de fonctionnement (4) est apportée en permanence lors de l'utilisation du terminal de traitement électronique.

3. La méthode de l'une des revendications 1 ou 2, ledit terminal de traitement électronique comportant un affichage (3) matriciel, ladite indication du mode de fonctionnement (4) étant affichée sur une portion dudit affichage.

4. La méthode de la revendication 3, dans laquelle une dite indication du mode de fonctionnement (4) est apportée sur ledit affichage uniquement lorsque ledit terminal de traitement électronique (1) se trouve en mode de fonctionnement non sécurisé.

5. La méthode de l'une des revendications 3 ou 4, dans laquelle ladite région se déplace systématiquement ou aléatoirement à l'intérieur de la surface totale de l'affichage.

6. La méthode de l'une des revendications 3 à 5, dans laquelle ladite indication du mode de fonctionnement (4) est affichée à l'aide d'un texte et/ou d'illustrations graphiques.

7. La méthode de la revendication 6, dans laquelle ladite indication du mode de fonctionnement (4) est affichée simultanément ou successivement en plusieurs langues.

8. La méthode de l'une des revendications 1 à 7, dans laquelle ladite indication est apportée à l'aide d'un choix de couleur dépendant du mode de fonctionnement.

9. La méthode de l'une des revendications 1 à 8, dans laquelle ladite indication est apportée à l'aide de témoins lumineux, par exemple de diodes électroluminescentes.

10. La méthode de l'une des revendications 1 à 9, dans laquelle ladite indication est apportée à l'aide de signaux audibles.

11. La méthode de l'une des revendications 1 à 10, dans laquelle au moins une première application est exécutée dans ledit mode sécurisé au moyen d'un premier processeur (7) dudit terminal de traitement électronique,
dans laquelle au moins une deuxième application est exécutée dans ledit mode non sécurisé au moyen d'un deuxième processeur (9) dudit terminal de traitement électronique,
dans laquelle ledit premier processeur et ledit deuxième processeur partagent le même affichage (3) pour afficher, en succession des données,
dans laquelle ledit premier processeur contrôle ledit affichage,
dans laquelle ledit deuxième processeur accède audit affichage au travers dudit premier processeur,
et dans laquelle ladite indication du mode de fonctionnement (4) est apportée sur ledit affichage par ledit premier processeur.

12. La méthode de la revendication 11, dans laquelle ledit premier processeur (7) et ledit deuxième processeur (9) partagent en outre le même clavier (2) et le même lecteur de cartes à puce et/ou à piste magnétiques (8).

13. La méthode de l'une des revendications 1 à 12, comprenant une étape de programmation par le fabricant dudit terminal de traitement électronique (1) de l'ensemble des applications fonctionnant dans ledit mode sécurisé,
une étape de certification dudit terminal de traitement électronique avec lesdites applications fonctionnant dans ledit mode sécurisé,
après certification, une étape de programmation par un tiers d'au moins une application fonctionnant dans ledit mode non sécurisé.

14. La méthode de l'une des revendications 1 à 13, dans laquelle un dispositif externe, par exemple un ordinateur portable, se connecte audit terminal de traitement électronique (1) au travers d'une interface (10) afin d'accéder à des programmes et/ou des données dans ledit mode de fonctionnement sécurisé.

15. La méthode de la revendication 14, dans laquelle ledit dispositif externe se connecte audit terminal de traitement électronique au travers d'une interface sans fil.

16. La méthode de l'une des revendications 1 à 15, dans laquelle des informations non sensibles sont échangées entre au moins une application fonctionnant dans le mode sécurisés et au moins une application fonctionnant dans le mode non sécurisé.

17. La méthode de l'une des revendications 1 à 16, comportant une étape de reprogrammation de composants électroniques programmables employés dans ledit mode non sécurisé au moyen d'un programme fonctionnant dans ledit mode sécurisé.

18. Terminal de traitement électronique (1) comportant :
un premier processeur (7) pour exécuter des applications en mode sécurisé,
un deuxième processeur (9) pour exécuter des applications dans un mode non sécurisé,
une interface utilisateur comportant au moins un affichage (3),
ladite interface (3) étant contrôlée par ledit premier processeur de manière à indiquer en permanence si l'application affichée fonctionne en mode sécurisé ou en mode non sécurisé.

19. Le terminal de traitement électronique de la revendication 18, dans lequel ledit premier processeur (7) et ledit deuxième processeur (9) partagent le même dit affichage (3) pour afficher, en succession des données,
dans laquelle ledit deuxième processeur (9) accède audit affichage au travers dudit premier processeur (7),
et dans laquelle ladite indication (4) est apportée sur ledit affichage par ledit premier processeur (7).

20. Le terminal de traitement électronique de l'une des revendications 18 ou 19, dans lequel l'un des systèmes d'exploitation suivant est installé pour opérer ledit deuxième processeur :
Linux,
Microsoft Windows xxx,
PalmOS
Symbian.

21. Le terminal de traitement électronique de l'une des revendications 18 à 20, dans lequel un système d'exploitation propre au fabricant de terminal de traitement électronique est installé pour opérer ledit premier processeur (7).

22. Le terminal de traitement électronique de l'une des revendications 18 à 21, dans lequel le système d'exploitation installé pour opérer ledit premier processeur (7) est différent du système d'exploitation installé pour opérer ledit deuxième processeur (9).

23. Le terminal de traitement électronique de l'une des revendications 18 à 22, comprenant un clavier (2) et/ou un lecteur de cartes à puce et/ou à piste magnétiques (8) partagés par lesdits processeurs (7, 9).

24. Le terminal de traitement électronique de l'une des revendications 18 à 23, comprenant une interface de communication sans fil (10) pour le connecter à un dispositif externe.
